Europäisches Patentamt

European Patent Office

Office européen des brevets

(11) Veröffentlichungsnummer: **0 100 816**
**B1**

(12) # EUROPÄISCHE PATENTSCHRIFT

(45) Veröffentlichungstag der Patentschrift:
**26.11.86**

(21) Anmeldenummer: **83103966.4**

(22) Anmeldetag: **22.04.83**

(51) Int. Cl.⁴: **C 08 G 8/28,** C 08 G 12/40,
C 08 G 14/12, C 08 K 5/06

(54) **Modifizierungsmittel für ein Bindemittel und dessen Verwendung in einem Bindemittel.**

(30) Priorität: **06.08.82 SE 8204599**

(43) Veröffentlichungstag der Anmeldung:
**22.02.84 Patentblatt 84/8**

(45) Bekanntmachung des Hinweises auf die Patenterteilung:
**26.11.86 Patentblatt 86/48**

(84) Benannte Vertragsstaaten:
**AT DE FR GB IT NL SE**

(56) Entgegenhaltungen:
**DE-A-2 112 318**

**K. THINIUS "Chemie, Physik und Technologie der Weichmacher", 1960 VEB VERLAG TECHNIK BERLIN Seiten 389, 390**

(73) Patentinhaber: **Perstorp AB, Box 5000, S-284 00 Perstorp (SE)**

(72) Erfinder: **Holmqvist, Ingrid, Smirdarevägen 7, S-240 36 Stehag (SE)**
Erfinder: **Kornfeldt, Per, Färgarevägen 29, S-284 00 Perstorp (SE)**
Erfinder: **Nolin, Anders, Alvägen 25, S-284 00 Perstorp (SE)**

(74) Vertreter: **Hansen, Bernd, Dr.rer.nat., Hoffmann, Eitle & Partner Patentanwälte Arabellastrasse 4, D-8000 München 81 (DE)**

LIBER, STOCKHOLM 1986

## Beschreibung

Die Erfindung betrifft ein Modifizierungsmittel für ein Bindemittel, wobei das Bindemittel aus einem Kondensationsprodukt aus (a) Formaldehyd und (b) Harnstoff, Melamin oder Phenol oder einer Mischung von zwei oder drei dieser Komponenten aufgebaut ist.

Reaktionsprodukte aus Formaldehyd und Harnstoff, Melamin oder Phenol oder aus einer Mischung dieser Komponenten mit ähnlichen Verbindungen, z.B. Guanaminen oder Amiden werden seit vielen Jahren mit Verstärkungsmitteln oder Füllstoffen zur Herstellung von beispielsweise Laminaten verwendet.

Die angewendete Technologie ist bekannt und besteht im allgemeinen darin, dass man eine wässrige Lösung von Formaldehyd mit der ausgewählten Verbindung zu einer niedrigmolekularen löslichen Verbindung umsetzt, die in gelöster Form dann zu dem Verstärkungsmaterial oder dem Füllstoff zugegeben wird, worauf man dann das Lösungsmittel abdampft. Das halbfertige Produkt wird dann unter erhöhtem Druck und unter Zufuhr von Wärme zu einem Endprodukt geformt. Bei dieser Verfahrensstufe läuft in dem niedrigmolekularen Bindemittel auf Basis von Formaldehyd eine Polykondensationsreaktion ab, durch welche der Binder in eine dreidimensionale hochmolekulare Verbindung mit ausgezeichneten chemischen und physikalischen Eigenschaften überführt wird.

Eine wesentliche Stufe bei diesem Verfahren besteht darin, dass das niedrigmolekulargewichtige Bindemittel schmilzt und in eine Fliessphase übergeht, bevor das Molekularwachstum beginnt. Dies ist die Voraussetzung, um ein Endprodukt mit den erforderlichen Eigenschaften, wie Formstabilität, zu erhalten.

Das Fliessen während der Formgebungs- und Härtungsphase wird durch mehrere Faktoren beeinflusst. Die wichtigsten Faktoren sind das Verhältnis zwischen der Menge des Bindemittels und des Verstärkungsmaterials oder des Füllstoffes, der Gehalt an Feuchtigkeit in der Mischung und der Schmelzpunkt, die Schmelzviskosität und die Härtungsgeschwindigkeit des Bindemittels unter den gewählten Bedingungen. Die allerwichtigste Formgebungsbedingungen sind der Verformungsdruck, die Temperatur und die Formgebungszeit. Bei Anwendung eines hohen Verformungsdruckes kann man ein befriedigendes Fliessen auch bei verhältnismässig niedrigen Mengen an Bindemittel und bei einem niedrigen Gehalt an Feuchtigkeit unter Anwendung einer geeigneten Temperatur erreichen. Nimmt der Verformungsdruck ab, müssen andere Faktoren, welche das Fliessen beeinflussen, verändert werden, um den Fliesseffekt aufrecht zu erhalten.

In der Praxis wird das Verformungsverfahren bei der Herstellung von laminierten Produkten auf zwei verschiedene Weisen durchgeführt. Bei der ersten Methode wird das Material in eine Kaltpresse eingegeben, worauf man dann den Druck erhöht und Wärme einwirken lässt. Anschliessend werden die Temperatur und der Druck erniedrigt. Bei der zweiten Methode wird das Material in eine Heisspresse eingefüllt und dann wird der Druck erhöht. Dann wird der Druck, ohne dass man kühlt, gesenkt. Bei beiden Verfahren findet eine Kompression und eine Formgebung des Materials sowie ein Schmelzen und ein Härten des Binders statt.

Die Methode zur Herstellung von Endprodukten ohne Kühlvorrichtungen, bietet grosse wirtschaftliche Vorteile im Vergleich zu der ersterwähnten Methode, zum Teil aufgrund des geringeren Energieverbrauchs, zum Teil aufgrund der grossen Zeiteinsparung.

Während der letzten Jahre hat eine technische Entwicklung von statischen Laminierpressen, die absatzweise arbeiten, zu kontinuierlich arbeitenden Bandpressen bei der Herstellung von gleichmässigen wärmehärtbaren Harzlaminaten stattgefunden. Die kontinuierlich arbeitenden Bandpressen für Laminate arbeiten im allgemeinen mit erheblich niedrigeren Drücken von etwa 10 bis 25 bar im Vergleich zu 100 bar und mit kürzeren presszeiten, die etwa 1/30 bis 1/300 der Presszeit bei einem statischen Verfahren unter Kühlung ausmachen.

Im Vergleich zu einem üblichen Presszyklus, bei dem man in einer statischen Presse kühlt, ist bei einem kontinuierlichen Verfahren ein weit besseres Fliessen und eine erheblich höhere Reaktivität des Bindemittels erforderlich. Diese beiden Eigenschaften sind an und für sich unvereinbar. Das schnelle Ansteigen des Molekulargewichts erniedrigt nämlich die Fliesszeit. Eine Methode zur Lösung dieses Problems besteht darin, dass man das Verhältnis des Bindemittels im Vergleich zu dem Verstärkungsmaterial erhöht und dass man den Feuchtigkeitsgehalt des Materials, bevor dieses geformt und gehärtet wird, anhebt. Dieses Verfahren ist jedoch sehr kostspielig und die Fertigprodukte haben unerwünschte Eigenschaften, z.B. eine grosse Sprödigkeit.

Die Erfindung betrifft ein Modifizierungsmittel für die Zugabe zu einem Bindemittel, das aus einem Kondensationsprodukt aus (a) Formaldehyd und (b) Harnstoff, Melamin oder Phenol oder einer Mischung von zwei oder drei dieser Komponenten aufgebaut ist, das dadurch gekennzeichnet ist, daß das Modifizierungsmittel Formale von Pentaerythrit und Dipentaerythrit, Methylether von Pentaerythrit und Dipentaerythrit und freies Pentaerythrit enthält.

Das Modifizierungsmittel erhält man durch alkalische Reaktion zwischen Formaldehyd und Acytaldehyd in einem Molverhältnis von 3 bis 6: 1. Die Erfindung betrifft weiterhin auch die Verwendung von 5 bis 60 Gew.% bezogen auf das trockene Bindemittel, eines Modifizierungsmittels der vorgenannten Art als Additiv zu einem Bindemittel aufgebaut auf einem Kondensationsprodukt aus (a) Formaldehyd und (b) Harnstoff, Melamin oder Phenol oder eine Mischung aus zwei oder drei dieser Komponenten.

Das Bindemittel kann aus einem Melamin-Formaldehyd-Harz, Harnstoff-Formaldehyd-Harz, Phenol-Formaldehyd-Harz, Harnstoff-Melamin-Formaldehyd-Harz, Harnstoff-Phenol-Formaldehyd-Harz, Melamin-Phenol-Formaldehyd-Harz oder Harnstoff-Melamin-Phenol-Formaldehyd-Harz bestehen. Solche Harze können zusätzlich beispielsweise auch noch Toluolsulfonamid, Laktame, Guanamine, Amide, Amine oder andere Additive, welche die Qualität der Harze verbessern, enthalten. Diese Harze werden nach bekannten Methoden, wie sie in der Spezialliteratur beschrieben werden, hergestellt.

Das Modifizierungsmittel enthält Formale von Pentaerythrit und Dipentaerythrit, Methylether von Pentaerythrit und Dipentaerythrit und freies Pentaerythrit.

Gemäss einer Ausführungsform der Erfindung enthält das Modifizierungsmittel 30 bis 70 Gew.% einer Mischung der Formale von Pentaerythrit und Dipentaerythrit, 5 bis 35 Gew.% einer Mischung der Methylether von Pentaerythrit und Dipentaerythrit und 0,5 bis 15 Gew.% freies Pentaerythrit, wobei der mögliche Rest verschiedene Aldolkondensationsprodukte enthält.

Das Modifizierungsmittel kann zu dem Bindemittel vor, während oder nach der Synthese des Bindemittels zugegeben werden.

Bei der Verwendung des Bindemittels zum Imprägnieren von kontinuierlichen Rollen eines Fasermaterials, wie papier, wird ein Härtungsmittel zu dem Bindemittel zugegeben.

Die Erfindung wird im Zusammenhang mit den Ausführungsbeispielen beschrieben. Beispiel 1 zeigt die Herstellung eines Harnstoff-Phenol-Formaldehyd-Harzes, das ein Modifizierungsmittel gemäss der Erfindung enthält, und die Verwendung des Harzes zur Herstellung eines dekorativen Hochdrucklaminats,

Beispiel 2 zeigt die Herstellung eines Melamin-Formaldehyd-Harzes, bei dem man ein Modifizierungsmittel gemäss der Erfindung eingemischt hat, und die Verwendung des Harzes zur Herstellung eines kontinuierlichen Laminats. Beispiel 3 zeigt die Herstellung eines Melamin-Formaldehyd-Harzes, welches mit einem Modifizierungsmittel gemäss der Erfindung co-kondensiert wurde, und die Verwendung des Harzes für die Herstellung eines kontinuierlichen Laminats. In Beispiel 4 wird schliesslich die Herstellung eines Harnstoff-Melamin-Formaldehyd-Harzes beschrieben, welches mit einem erfindungsgemässen Modifizierungsmittel co-kondensiert wurde, und die Verwendung des Harzes zur Herstellung eines kontinuierlichen Laminats.

**Beispiel 1**

53,11 Gew.-Teile 50 %-iges Formalin, 38,86 Gew.-Teile Phenol und 7,23 Gew.-Teile eines Modifizierungsmittels gemäss der Erfindung aus:
Formalen von Monopentaerythrit und 45 Gew.%
Dipentaerythrit verschiedenen Aldol kondensationsprodukten 24 Gew.%
Methylether von Monopentaerythrit und Dipentaerythrit 14 Gew.%
freiem pentaerythrit 7 Gew.%
Natriumformiat 0,5 Gew.%
Rest 9,5 Gew.%
wurden in einem Reaktionsgefäss vorgelegt. Der pH wurde auf etwa 7,5 eingestellt und die Mischung wurde unter Rückfluss erhitzt. Unter Rückfluss während etwa 35 Minuten wurde Natriumhydroxid kontinuierlich zugegeben. Dann wurde die Mischung gekühlt und weiteres Natriumhydroxid zugegeben. Insgesamt wurden 1,4 Gew.% Natriumhydroxid, bezogen auf das Phenol, zugegeben.

16,81 Gew.-Teile Wasser destillierten im Vakuum bei einer Temperatur von etwa 60°C ab. Anschliessend wurden 5,0 Gew.-Teile Methanol und 7,84 Gew.-Teile Harnstoff bei 60°C zugegeben. Nach dem Auflösen des Harnstoffs wurde das Reaktionsgemisch gekühlt.

Das erhaltene Harz wurde in Wasser gelöst und hatte folgende Eigenschaften:
Feststoffgehalt: 65 %
Viskosität: 180 mPa.s
pH: 8,4
Härtungszeit: 150 sek. bei 150°C
[Hubhärtungszeit (stroke cure time)]
Ein Kraftpapier mit einem Oberflächengewicht von 150g/m² wurde mit der Harzlösung bis zu einem Harzgehalt von 28 % und 7 % an flüchtigen Bestandteilen imprägniert. Fünf Blätter aus einem derartig imprägnierten Kraftpapier und zwei Oberflächenblätter aus Papier mit einer dekorativen Funktion, die mit einem Melaminharz inprägniert worden waren, wurden auf das Laminat in einer üblichen Hochdruckpresse aufgepresst. Man erhielt ein zufriedenstellendes Laminat, das dem ISO-Standard 4586 entsprach.

**Beispiel 2**

25,5 Gew.-Teile 50 %-iges Formalin, 24,5 Gew.-Teile Wasser, 0,6 Gew.-Teile Triethanolamin, 1,3 Gew.-Teile Toluolsulfonamid und 29,2 Gew.-Teile Melamin wurden in ein Reaktionsgefäss gegeben. Der pH wurde auf 9,7 eingestellt und die Mischung wurde unter Rückfluss erhitzt.

Nach 10-minütigem Erhitzen unter Rückfluss wurde die Mischung auf 90°C gekühlt und dann liess man die Reaktion weiter ablaufen, bis sich ein Niederschlag bildete, wenn man 1,9 ml Wasser zu einer 1 g-Probe des Harzes bei 25°C zugab. Dann wurde das Reaktionsgemisch auf Raumtemperatur gekühlt und 8,9 Gew.-Teile eines erfindungsgemässen Modifizierungsmittels wurden zugegeben. Das Modifizierungsmittel bestand aus:

Natriumformiat 0,2 Gew.%

freiem Pentaerythrit 6,8 Gew.%

Formalen von Monopentaerythrit und Dipentaerythrit 46,1 Gew.%

freiem Dipentaerythrit 1,0 Gew.%

Methylether von Monopentaerythrit und Dipentaerythrit 14,4 Gew.%

Semiformalen 2,3 Gew.%

anderen Aldolkondensationsproduktenh 27,2 Gew.%

Wasser 2,0 Gew.%

Das gebildete Harz wurde in Wasser gelöst und hatte folgende Eigenschaften:

Feststoffgehalt: 50,5 %

Viskosität: 30 mPa.s

pH: 9,6

Härtungszeit: 220 sek. bei 150° C (Hubhärtungszeit)

Nach Zugabe von 1,1 % p-Toluolsulfonsäure wurde der pH auf 6,9 verringert, wobei die Reaktivität in einem solchen Masse zunahm, dass die Härtungszeit (Hubhärtungszeit) nur noch 27 Sekunden betrug.

Zwei unterschiedliche Qualitäten von Kraftpapier mit einem Oberflächengewicht von 80 g/m² bzw. 150 g/m² wurden mit der Harzlösung bis zu einem Harzgehalt von 50 % mit 9,5 % flüchtigen Bestandteilen imprägniert.

Zwei Rollen eines auf diese Weise erhaltenen Kernpapiers wurden mit einem dekorativen Papierblatt, das mit einem Melaminharz imprägniert war und wobei das dekorative Blatt die Oberfläche darstellte, und mit einem Pergamentpapier als Rückseite, in einer kontinuierlichen Doppelbandpresse zu einem Laminat mit einer Dicke von 0,6 mm verpresst. Der Formgebungsdruck betrug 13 bar und die Bandtemperatur 160° C und die Bandgeschwindigkeit 8 m/min.

Das so erhaltene Laminat war gut durchgehärtet und zeigte die nachfolgenden ausgezeichneten Eigenschaften:

Wärmetest, Sossenschüssel 180° C, 20 Minuten: bestanden; Schlagfestigkeit gemäss DIN: 18,4 N;

Blasenbildungstemperatur: 190° C;

Dimensionsstabilität gemäss ISO:

längs der Oberfläche 4,5 pro Mille quer zur Oberfläche 11 pro Mille;

Formbarkeit, 6 mm Radius, 145° C: bestanden;

Siedewassertest, 15 Minuten: bestanden.

Toluolsulfonamid und 264 Gew.-Teile Melamin zugegeben.

Das Reaktionsgemisch wurde auf 85° C erwärmt und dann wurde der pH mit Natriumhydroxid auf 10,1 eingestellt. Die Temperatur wurde anschliessend 2,5 Stunden bei 85° C konstant gehalten. Wenn die Verträglichkeit des Harzes mit Wasser weniger als 2 ml Wasser/g Harz bei Raumtemperatur betrug, wurden weitere 1,5 Gew.-Teile Triethanolamin zugegeben und anschliessend wurde die gesamte Mischung auf Raumtemperatur gekühlt. Das Harz wurde in Wasser gelöst und zeigte folgende Eigenschaften:

Feststoffgehalt: 49,2 %

Viskosität: 28 mPa.s

pH: 9,6

Härtungszeit: 240 sek. bei 150° C (Hubhärtungszeit)

Nach Zugabe von 1,1 % p-Toluolsulfonsäure fiel der pH auf 6,9 ab und die Reaktivität erhöhte sich derartig, dass die Härtungszeit (Hubhärtungszeit) nur noch 27 Sekunden betrug.

Zwei verschiedene Qualitäten von Kraftpapier mit einem Oberflächengewicht von 80 g/m² bzw. 150 g/m² wurden mit der Harzlösung bis zu einem Harzgehalt von 51,3 % und 9,5 % an flüchtigen Bestandteilen bzw. zu einem Harzgehalt von 50,8 % und 9,7 % an flüchtigen Bestandteilen imprägniert.

Zwei Rollen eines auf diese Weise erhaltenen Kernpapiers wurden mit einem dekorativen Papierblatt, das mit Melaminharz imprägniert worden war und wobei das dekorative Blatt die Oberflächenschicht bildete und mit einem Pergamentpapier auf der Rückseite, in einer kontinuierlichen Doppelbandpresse zu einem Laminat mit einer Dicke von 0,6 mm verpresst. Der Formgebungsdruck betrug 13,5 bar, die Bandtemperatur 155° C und die Bandgeschwindigkeit 7,3 m/min..

Das so erhaltene Laminat war gut ausgehärtet und zeigte die nachfolgenden ausgezeichneten physikalischen Eigenschaften:

Wärmetest, Sossenschüssel 180° C, 20 Minuten: bestanden;

Schlagfestigkeit gemäss DIN: 18,8 N;

Blasenbildungstemperatur: 190° C;

Dimensionsstabilität gemäss ISA:

längs der Oberfläche 4,5 pro Mille quer zur Oberfläche 11 pro Mille;

Formbarkeit, 6 mm Radius, 145° C: bestanden;

Siedewassertest, 15 Minuten: bestanden.

**Beispiel 3**

218 Gew.-Teile 50 %-iges Formalin, 180 Gew.-Teile des in Beispiel 2 beschriebenen Modifizierungsmittels, 321 Gew.-Teile Wasser und 3,6 Gew.-Teile Triethanolamin wurden in einem Reaktionsgefäss gemischt. Der pH wurde mit einer Natronlaugelösung auf 9,8 eingestellt und dann wurden 12 Gew.-Teile p-

**Beispiel 4**

34,65 Gew.-Teile 50 %-iges Formalin, 18,63 Gew.-Teile Wasser, 6,50 Gew.-Teile des in Beispiel 2 beschriebenen Modifizierungsmittels, 4,55 Gew.-Teile Isobutanol und 0,36 Gew.-Teile Triethanolamin wurden in einen Reaktionsgefäss vorgelegt. Der pH wurde auf 9,1 eingestellt.

8,25 Gew.-Teile Harnstoff wurden zugegeben und dann wurde die Mischung auf 80°C erwärmt. Nach 30 Minuten bei dieser Temperatur wurden 17,31 Gew.-Teile Melamin zugegeben. Nach weiteren 30 Minuten wurden 8,25 Gew.-Teile Harnstoff zugegeben, worauf die Temperatur auf 65°C erniedrigt wurde. Während der gesamten Reaktion wurde der pH wenigstens bei 8,6 mittels Natriumhydroxid gehalten.

Die Kondensation wurde bei 65°C weitergeführt, bis die Verträglichkeit des Harzes mit Wasser weniger als 4 ml/g Harz bei 25°C betrug. Dann wurden 1,0 Gew.-Teile Triethanolamin zugegeben und das Reaktionsgemisch gekühlt.

Das gebildete Harz wurde in Wasser gelöst und zeigte folgende Eigenschaften:

Feststoffgehalt: 50 %
Viskosität: 30 mPa.s
pH: 9

Die Reaktivität wurde mit 1,4 % p-Toluolsulfonsäure eingestellt, so dass die Härtungszeit (Hubhärtungszeit) 28 Sekunden betrug.

Ungebleichtes Kraftpapier mit einem Oberflächengewicht von 80 g/m$^2$ wurde mit der hergestellten Harzlösung bis zu einem Harzgehalt von 50 % mit einem Gehalt von 9 % an flüchtigen Bestandteilen imprägniert. Drei Rollen eines so hergestellten Kernpapiers wurden mit einem mit Melaminharz imprägnierten dekorativen Blatt als Oberflächenschicht und einem Pergamentpapier als Rückseite in einer kontinuierlichen Doppelbandpresse zu einem Laminat mit einer Dicke von 0,6 mm verpresst. Der Formgebungsdruck betrug 12 bar und die Bandtemperatur 150°C und die Bandgeschwindigkeit 7 m/min..

Ein so erhaltenes Laminat war gut ausgehärtet und zeigte die nachfolgenden ausgezeichneten physikalischen Eigenschaften:

Wärmetest, Sossenschüssel 180°C, 20 min: bestanden; Schlagfestigkeit gemäss DIN: 17,5N; Blasenbildungstemperatur: 180°C;

Dimensionsstabilität:
längs der Oberfläche 4 pro Mille
quer zur Oberfläche 10 pro Mille;
Siedewassertest, 15 Minuten: bestanden.

## Patentansprüche

### für die Vertragsstaaten DE, FR, GB, IT, NL, SE

1. Modifizierungsmittel für die Zugabe zu einem Bindemittel, das aus einem Kondensationsprodukt aus (a) Formaldehyd und (b) Harnstoff, Melamin oder Phenol oder einer Mischung von zwei oder drei dieser Komponenten aufgebaut ist, dadurch gekennzeichnet, daß das Modifizierungsmittel Formale von Pentaerythrit und Dipentaerythrit, Methylether von Pentaerythrit und Dipentaerythrit und freies Pentaerythrit enthalt.

2. Modifizierungsmittel gemäß Anspruch 1, dadurch gekennzeichnet, daß es 30 bis 70 Gew.% einer Mischung von Formalen von Pentaerythrit und Dipentaerythrit, 5 bis 35 Gew.% einer Mischung von Methylethern von Pentaerythrit und Dipentaerythrit und 0,5 bis 15 Gew.% freies Pentaerythrit und als Rest verschiedene Aldolkondensationsprodukte enthalt.

3. Verwendung von 5 bis 60 Gew.%, bezogen auf das trockene Bindemittel, eines Modifizierungsmittels gemäß Ansprüchen 1 oder 2 als Additiv zu einem Bindemittel, aufgebaut auf einem Kondensationsprodukt aus (a) Formaldehyd und (b) Harnstoff, Melamin oder Phenol oder eine Mischungaus zwei oder drei dieser Komponenten.

## Patentansprüche

### für den Vertragsstaat AT

1. Verwendung eines Modifizierungsmittels, das Formale von Pentaerythrit und Dipentaerythrit, Methylether von Pentaerythrit und Dipentaerythrit und freies Pentaerythrit enthält, als Modifizierungsmittel für die Zugabe zu einem Bindemittel, das aus einem Kondensationsprodukt aus (a) Formaldehyd und (b) Harnstoff, Melamin oder Phenol oder einer Mischung von zwei oder drei dieser Komponenten aufgebaut ist.

2. Verwendung gemäß Anspruch 1, dadurch gekennzeichnet, daß das Modifizierungsmittel 30 bis 70 Gew.% einer Mischung von Formalen von Pentaerythrit und Dipentaerythrit, 5 bis 35 Gew.% einer Mischung von Methylethern von Pentaerythrit und Dipentaerythrit und 0,5 bis 15 Gew.% freies Pentaerythrit und als Rest verschiedene Aldolkondensationsprodukte enthält.

3. Verwendung von 5 bis 60 Gew.% bezogen auf das trockene Bindemittel, eines Modifizierungsmittels gemäß der Definition in den Ansprüchen 1 und 2, als Additiv zu einem Bindemittel, aufgebaut auf einem Kondensationsprodukt aus (a) Formaldehyd und (b) Harnstoff, Melamin oder Phenol oder eine Mischung aus zwei oder drei dieser Komponenten.

## Claims

### for the Contracting States DE, FR, GB, IT, NL, SE

1. Modifying agent for addition to a binder that is synthesized from a condensation product of (a) formaldehyde and (b) urea, melamine or phenol or a mixture of two or three of these components, characterized in that the modifying agemt contains formals of pentaerythritol and dipentaerythritol, methylethers of pentaerythritol and dipentaerythritol and free pentaerythritol.

2. Modifying agent according to Claim 1, characterized in that it contains 30 to 70 weight % of a mixture of formals of pentaerythritol and dipentaerythritol, 5 to 35 weight % of a mixture of methylethers of pentaerythritol and dipentaerythritol and 0.5 to 15 weight % of free pentaerythritol the rest being various aldol condensation products.

3. Use of 5 to 60 weight %, based on the dry binder, of a modifying agent according to Claims 1 or 2 as an additive to a binder based on a condensation product of (a) formaldehyde and (b) urea, melamine or phenol or a mixture of two or three of these components.

## Claims

### for the Contracting State AT

1. Use of a modifying agent that contains formals of pentaerythritol and dipentaerythritol, methylethers of pentaerythritol and dipentaerythritol and free pentaerythritol, as a modifying agent for addition to a binder that is synthesized from a condensation product of (a) formaldehyde and (b) urea, melamine or phenol or a mixture of two or three of these components.

2. Use according to Claim 1, characterized in that the modifying agent contains 30 to 70 weight % of a mixture of formals of pentaerythritol and dipentaerythritol, 5 to 35 weight % of a mixture of methylethers of pentaerythritol and dipentaerythritol and 0.5 to 15 weight % of free pentaerythritol and the rest being various aldol condensation products.

3. Use of 5 to 60 weight %, based on the dry binder, of a modifying agent according to the definition in Claims 1 and 2, as additive to a binder, based on a condensation product of (a) formaldehyde and (b) urea, melamine or phenol or a mixture of two or three of these components.

## Revendications

### pour les Etats DE, FR, GB, IT, NL, SE

1. Agent modifiant pour adjonction à un liant, constitué par un produit de condensation de (a) formaldéhyde et (b) urée, mélamine ou phénol, ou un mélange de deux ou trois de ces composants, caractérisé en ce que cet agent modifiant contient des formals de pentaérythrite et de dipentaérythrite, des méthyléthers de pentaérythrite et de dipentaérythrite, et de la pentaérythrite libre.

2. Agent modifiant selon la revendication 1, caractérisé en ce qu'il contient de 30 à 70% en poids d'un mélange de formals de pentaérythrite et de dipentaérythrite, de 5 à 35% en poids d'un mélange de méthyléthers de pentaérythrite et de dipentaérythrite, et de 0,5 à 15% en poids de pentaérythrite libre, et, pour le reste, différents aldols produits par la condensation.

3. Utilisation de 5 à 60 % en poids par rapport au liant sec d'un agent modifiant selon la définition des revendications 1 et 2, comme additif à un liant, préparé à partir d'un produit de condensation de (a) formaldéhyde et (b) urée, mélamine ou phénol ou un mélange de deux ou trois de ces composants.

## Revendications

### pour l'Etat contractant AT

1. Utilisation d'un agent modifiant contenant des formals de pentaérythrite et de dipentaérythrite, des méthyléthers de pentaérythrite et de dipentaérythrites et de la pentaérythrite libre, comme agent modifiant pour adjonction à un liant, constitué par un produit de condensation de (a) formaldéhyde et (b) urée, mélamine ou phénol, ou un mélange de deux ou trois de ces composants.

2. Utilisation selon la revendication 1, caractérisée en ce que l'agent modifiant contient de 30 à 70% en poids d'un mélange de formals de pentaérythrite et de dipentaérythrite, de 5 à 35% en poids d'un mélange de méthyléthers de pentaérythrite et de dipentaérythrite, et de 0,5 à 15% en poids de pentaérythrite libre, et, pour le reste, différents aldols produits par la condensation.

3. Utilisation de 5 à 60% en poids, par rapport au liant sec, d'un agent modifiant selon la définition des revendications 1 et 2, comme additif à un liant, préparé à partir d'un produit de condensation de (a) formaldéhyde et (b) urée, mélamine ou phénol, ou un mélange de deux ou trois de ces composants.